(19)

**Europäisches Patentamt**

**European Patent Office**

**Office européen des brevets**

(11) **EP 4 779 262 A1**

(12) **EUROPEAN PATENT APPLICATION**

(43) Date of publication:
**22.07.2026  Bulletin 2026/30**

(21) Application number: **25152152.2**

(22) Date of filing: **16.01.2025**

(51) International Patent Classification (IPC):
**G01B 11/24** (2006.01)      **G01B 21/04** (2006.01)

(52) Cooperative Patent Classification (CPC):
**G01B 21/042; G01B 11/24**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ESPACE2001 S.A.**
**6496 Echternach (LU)**

(72) Inventors:
• **Gail, Jonathan**
 **35685 Dillenburg (DE)**

• **Boll, Alexander**
 **35606 Solms (DE)**
• **Sönke, Uwe**
 **64297 Darmstadt (DE)**
• **Kruse, Felix**
 **22047 Hamburg (DE)**
• **Färber, Philipp**
 **20539 Hamburg (DE)**
• **Leder, Günther**
 **68775 Ketsch (DE)**
• **Neddermeyer, Werner**
 **6496 Echternach (LU)**

(74) Representative: **Grupe, Dirk Bernhard Willi**
**Sendlinger Straße 28**
**80331 München (DE)**

(54) **METHOD AND SYSTEM FOR CALIBRATING A MEASURING HEAD**

(57)      A method (300) for calibrating a measuring head (105; 405; 505) comprises positioning (305) the measuring head (105; 405; 505) relative to a calibration object (O) such that the calibration object (O) is in the measuring field (M) of the measuring head (105; 405; 505) in accordance with a calibration position of the measuring head (105; 405; 505) and the calibration object (O); varying (310) a position of a variable mirror arrangement (122, 124) of the measuring head (105; 405; 505); receiving (315), from the variable mirror arrangement (122, 124), one or more position signals (SP) indicative of the varying position of the variable mirror arrangement (122, 124); operating (320) a laser device (110) of the measuring head (105; 405; 505), comprising switching the laser device (110) between an activated state and a deactivated state in accordance with a calibration dynamic projection pattern (CDP1; CDP2) depending on the varying position of the variable mirror arrangement (122, 124), the varying position of the variable mirror arrangement (122, 124) determined based at least partially on the one or more position signals (SP) and one or more calibration parameters applied to the one or more position signals (SP); receiving (325), from an image sensor arrangement (130, 132, 134), image sensor data (SL1, SL2) indicative of a varying position of scattered light (L_S) of the laser beam (L_D) in at least one image plane of the image sensor arrangement (130, 132, 134), the scattered light (L_S) comprising light (L_S) of the laser beam (L_D) which has been scattered by the calibration object (O) towards the image sensor arrangement (130, 132, 134); identifying (335), based on an analysis of image information (210; 220) encoded in the image sensor data (SL1, SL2), at least one topographic landmark of the calibration dynamic projection pattern (CDP1; CDP2) represented in the image information (210; 220); determining (340) a deviation between a position of the at least one topographic landmark in the image information (210; 220) and a reference position of the at least one topographic landmark; determining (345), based on the deviation, one or more replacement calibration parameters configured to compensate at least partially the deviation when, in the operating (320) of the laser device (110), the varying position of the variable mirror arrangement (122, 124) is determined based at least partially on the one or more position signals (SP) and the one or more replacement calibration parameters applied to the one or more position signals (SP), wherein determining (345) the one or more replacement calibration parameters is performed at least partially based on a geometric model which comprises a set of geometric angles ($\varphi$, $\vartheta$, $\alpha$, $\beta$, $\gamma$, $\varepsilon$), the set of geometric angles ($\varphi$, $\vartheta$, $\alpha$, $\beta$, $\gamma$, $\varepsilon$) representing at least the varying position of the variable mirror arrangement (122, 124), in particular with respect to a body of the measuring head (105; 405; 505), and a direction of the deflected laser beam (L_D) with respect to the varying position of the variable mirror arrangement (122, 124); and, setting (350) the one or more replacement calibration parameters as the one or more calibration para-

EP 4 779 262 A1

meters.

# FIG. 1

## Description

The disclosure relates to a method for calibrating a measuring head. The disclosure further relates to a system for calibrating a measuring head and to a measuring system comprising a measuring head.

## Background of the Disclosure

Optical measuring is in widespread use. Typical applications include quality assessment, for example, in the automated production of goods, detection of motion and/or objects, for example, in monitoring appliances, and technical inspection, for example, for determining deformation, abrasion or wear on mechanically exposed machine parts, and the like.

Advancing miniaturization of optical components, such as mirrors, lenses and sensors, favors an integration of such components into compact measuring systems. In this way, a range of potential applications of optical measuring is extended. In parallel, a need for precision measurements also increases, and is often difficult to meet, especially with compact measuring systems having relatively large measuring fields.

There is a continuous need for improved adjustment of measuring devices.

## Summary of the Disclosure

Accordingly, there is provided a method for calibrating a measuring head according to claim 1, a system for calibrating a measuring head according to claim 13, and a measuring system according to claim 15.

According to a first aspect, a method for calibrating a measuring head is provided. The measuring head comprises a laser device switchable between at least one activated state in which a laser beam is output by the laser device and at least one deactivated state in which a laser beam is not output by the laser device; a variable mirror arrangement configured to receive a laser beam output by the laser device and to deflect the received laser beam towards a measuring field of the measuring head; and, an optical sensor device configured to receive reflected light of the laser beam, the reflected light reflected towards the measuring head by one or more objects in the measuring field. The method comprises positioning the measuring head relative to a calibration object such that the calibration object is in the measuring field of the measuring head in accordance with a calibration position of the measuring head and the calibration object. The method further comprises varying a position of the variable mirror arrangement; receiving, from the variable mirror arrangement, one or more position signals indicative of the varying position of the variable mirror arrangement; operating the laser device, comprising switching the laser device between the activated state and the deactivated state in accordance with a calibration dynamic projection pattern depending on the varying position of the variable mirror arrangement, the varying position of the variable mirror arrangement determined based at least partially on the one or more position signals and one or more calibration parameters applied to the one or more position signals; and, receiving, from an image sensor arrangement, image sensor data indicative of a varying position of scattered light of the laser beam in at least one image plane of the image sensor arrangement, the scattered light comprising light of the laser beam which has been scattered by the calibration object towards the image sensor arrangement. The method further comprises identifying, based on an analysis of image information encoded in the image sensor data, at least one topographic landmark of the calibration dynamic projection pattern represented in the image information; determining a deviation between a position of the at least one topographic landmark in the image information and a reference position of the at least one topographic landmark; determining, based on the deviation, one or more replacement calibration parameters configured to compensate at least partially the deviation when, in the operating of the laser device, the varying position of the variable mirror arrangement is determined based at least partially on the one or more position signals and the one or more replacement calibration parameters applied to the one or more position signals, wherein determining the one or more replacement calibration parameters is performed at least partially based on a geometric model which comprises a set of geometric angles, the set of geometric angles representing at least the varying position of the variable mirror arrangement, in particular with respect to a body of the measuring head, and a direction of the deflected laser beam with respect to the varying position of the variable mirror arrangement; and, setting the one or more replacement calibration parameters as the one or more calibration parameters.

The method facilitates precise and efficient calibration of a measuring head. The method facilitates in particular precise calibration concerning a relationship between the one or more position signals output by the variable mirror arrangement of the measuring head and an effective position of the variable mirror arrangement with respect to an effective deflection, in particular an effective direction of deflection, of the output laser beam, by means of the variable mirror arrangement, towards the measuring field. This is based on the inventors' finding that by using a geometric model with the aforesaid characteristics in determining the calibration parameters for the measuring head, increased accuracy of the calibration is facilitated for various scenarios, including increased accuracy of a calibration concerning the relationship between the one or more position signals output by the variable mirror arrangement of the measuring head and the effective position of the variable mirror arrangement with respect to an effective deflection of the output laser beam. Scenarios for which that is facilitated comprise, in particular, a direct calculation of the calibration parameters based on a single image from the image sensor, and, as an alternative, an iterative determining, and respective applying, of the calibration parameters based on each of a sequence of images from the image sensor, depending on available information.

Furthermore, determining, in particular directly calculating, the one or more replacement calibration parameters based on a geometric model having the aforesaid characteristics facilitates a flexible adaptation of the method to varying geometric properties of the calibration setup, including the arrangement of the measuring head and the calibration object, such as varying distances due to thermomechanical expansion or contraction of components of the calibration setup, or others, since parameters of the geometric model can be flexibly adapted. This applies, especially, in comparison to calibration methods that rely on stored look-up tables for determining calibration parameters based on observed beam deflection characteristics, in particular, where such look-up tables have been determined experimentally.

The method may further comprise sequentially iterating all of the varying, receiving, operating, identifying, determining, and setting steps, when a break-off condition is not met. By facilitating an at least partially iterative performance, a processing load incurred at a time in determining the one or more replacement calibration parameters can be reduced compared to a definitive calculation, for examples, based on all principles of the geometric model and/or the complete image information.

The set of geometric angles may further represent a direction of the output laser beam, which is output by the laser device, with respect to the varying position of the variable mirror arrangement.

Additionally, or alternatively, the geometric model may further comprise at least one distance parameter representing a geometric length in a relative arrangement of the calibration object and the measuring head, in particular in a relative arrangement of the calibration object and the variable mirror arrangement. A geometric model which comprises at least one distance parameter facilitates improved effectiveness and accuracy of the method. In particular, a geometric model which comprises at least one distance parameter facilitates a use of individual, i.e., absolute, positions and/or individual distances as the one or more deviations (in addition, or as an alternative, to relative proportions, angles, etc., as the one or more deviations) in determining the one or more replacement calibration parameters.

The method may further comprise determining whether a mathematical description of the position of the calibration object is available, such as encoded in a computer-readable dataset.

Sequentially iterating all of the varying, receiving, operating, identifying, determining, and setting-steps can be performed when it has been determined that a mathematical description of the position of the calibration object is not available.

The position of the calibration object may comprise one or more of a location, an orientation and/or an extension of the calibration object. The one or more of the location, the orientation and/or the extension of the calibration object may be defined with respect to a cradle of a calibrating system, the cradle configured to accommodate the measuring head and the calibration object in accordance with the calibration position.

In addition, or as an alternative, when it has been determined that a mathematical description of the position of the calibration object is available, determining the one or more replacement calibration parameters can be performed at least partially based on the geometric model, wherein the geometric model includes the mathematical description of the position the calibration object, such as by means of a definitive calculation without the aforesaid sequentially iterating. Determining the one or more replacement calibration parameters based on a geometric model which includes a mathematical description of the position of the calibration object enables dispensing with the aforesaid sequentially iterating while providing for a precise calculation of the one or more replacement calibration parameters in a single 'run'.

The method may further comprise, after setting the one or more replacement calibration parameters as the one or more calibration parameters and/or when the break-off condition is met, providing the one or more calibration parameters for use in one or more measurements by means of the measuring head.

Providing the one or more calibration parameters may comprise storing the one or more calibration parameters in a data storage device of the measuring head and/or of a measuring system associated with the measuring head.

The image sensor arrangement may comprise the optical sensor device of the measuring head. In this case, the scattered light of the laser beam which has been scattered by the calibration object towards the image sensor arrangement may comprise reflected light which has been reflected by the calibration object towards the optical sensor device. In implementations in which the optical sensor device of the measuring head comprises an image sensor, the provision of an additional, in particular external, sensor device for constituting the image sensor arrangement for performing the method can be dispensed with. This facilitates a simple calibration setup, as the optical sensor device of the measuring head suffices for detecting the scattered light of the laser beam and for providing corresponding image sensor data indicative of the varying position of the scattered light of the laser beam in the image plane of the optical sensor device.

Alternatively, or additionally, the image sensor arrangement may be implemented at least partially external to the measuring head. In this case, the scattered light of the laser beam which has been scattered by the calibration object towards the image sensor arrangement may comprise transmitted light which has been transmitted by the calibration object towards the image sensor arrangement, in particular towards an image sensor device external to the measuring head. In implementations in which the image sensor arrangement is implemented at least partially external to the measuring head, the optical sensor device of the measuring head does not need to be suited for providing the image sensor data indicative of the varying position of the scattered light of the laser beam in any image plane of the optical sensor device. This facilitates an application of the method to measuring heads having optical sensor devices which are not configured to provide image information suitable for the calibration, such as photo diodes usable in measuring heads for time-of-flight based optical depth measuring, and/or at a production stage of the measuring head when the optical sensor device has not yet been mounted in the measuring head, and/or to measuring heads in which an accuracy of a placing of the optical sensor device in the measuring head relative to the laser device and/or to the variable mirror arrangement is insufficient for permitting suitable calibration based (only) on the sensor data of the optical sensor device.

The calibration object may comprise a calibration plate arranged such that it extends, at least essentially, transverse to a direction of the deflected laser beam. The calibration plate may comprise at least partially transparent material configured to scatter incident light of the deflected laser beam and to at least partially reflect and/or at least partially transmit the scattered light of the deflected laser beam.

The calibration plate may have a planar shape over an entire extension of a projection of the calibration dynamic projection pattern on the calibration plate. Alternatively, the calibration plate may have a non-planar shape, in particular a dome-like and/or a cylindrically curved shape, over at least a part of the entire extension of the projection of the calibration dynamic projection pattern on the calibration plate.

The method may further comprise a delay mismatch compensation operation for at least partially compensating at least one delay mismatch in the switching of the laser device associated with different directions in which the variable mirror arrangement is variable. The delay mismatch compensation operation may comprise identifying, based on an analysis of image information encoded in the image sensor data, at least one delay mismatch in the switching of the laser device, the at least one delay mismatch associated with different directions in which the variable mirror arrangement is varied when the laser device is switched; and, determining, based on the at least one delay mismatch, one or more delay mismatch compensation parameters configured to compensate at least partially the at least one delay mismatch when, in operating the laser device, the laser device is switched further depending on a respective one or more of the different directions in which the variable mirror arrangement is varied and based on the one or more delay mismatch compensation parameters. Operating the laser device may be subsequently performed using the one or more delay mismatch compensation parameters in switching the laser device.

The delay mismatch may result from a varying response time of the variable mirror arrangement concerning at least one of outputting the one or more position signals in response to a position of the variable mirror arrangement and/or varying a position of the variable mirror arrangement in response to a received drive signal, depending on a direction in which the variable mirror arrangement is varied.

The method may further comprise providing, in particular storing in a data storage device of the measuring head and/or of a measuring system associated with the measuring head, the one or more delay mismatch compensation parameters for use in operating the laser device.

The at least one variable mirror arrangement may comprise an oscillating mirror arrangement configured to produce an oscillating deflection plane for the laser beam. The calibration dynamic projection pattern may be an areal calibration dynamic projection pattern, and the oscillating deflection plane may be configured to rotate, in particular oscillate (i.e., rotate bi-directionally),about at least two non-parallel axes for deflecting the laser beam towards the measuring field in accordance with the areal calibration dynamic projection pattern. An oscillation of the deflection plane about a first one of the at least two non-parallel axes may have a first periodicity. In addition, an oscillation of the deflection plane about a second one of the at least two non-parallel axes may have a second periodicity different from the first periodicity, in implementations in which the oscillating deflection plane is configured to oscillate about the second axis. Alternatively, a (uni-directional) rotation of the deflection plane about the second axis may have a second periodicity different from the first periodicity, in implementations in which the oscillating deflection plane is configured to rotate uni-directionally about the second axis.

The variable mirror arrangement may be a micro-electro-mechanical system, MEMS.

The measuring head may be configured to output the one or more position signals and the image sensor data towards a data processor to which the measuring head is operatively couplable. At least some of the varying, receiving, operating, identifying, determining, and/or setting steps may be performed by means of the data processor.

The calibrating may be configured to render position signals output by the variable mirror arrangement and associated optical sensor data output by the optical sensor device indicative of a depth profile of one or more objects in the measuring field in an operation of the measuring head.

According to another aspect, a calibrating system for calibrating a measuring head is provided. The calibrating system comprises a cradle configured to accommodate a measuring head and a calibration object in accordance with a calibration position of the measuring head and the calibration object. The measuring head comprises a laser device switchable between at least one activated state in which a laser beam is output by the laser device and at least one deactivated state in which a laser beam is not output by the laser device, a variable mirror arrangement configured to receive a laser beam output by the laser device and to deflect the received laser beam towards a measuring field of the measuring head, and an optical sensor device configured to receive reflected light of the laser beam, the reflected light reflected towards the measuring head by one or more objects in the measuring field. The calibrating system further comprises a control unit, the control unit comprising a data processor operatively connectable to the measuring head and configured to receive data signals from the measuring head and to generate control signals for output to the measuring head, and a data storage device operatively coupled to the data processor and comprising portions of program code which, when executed by the data processor configure the data processor to perform the method as provided herein.

The data processor may be further configured to store, in the data storage device, one or more calibration parameters which have been determined by means of the data processor.

According to another aspect, a measuring system is provided. The measuring system comprises a measuring head and a data storage device, the data storage device storing one or more calibration parameters for the measuring head, the one or more calibration parameters determined by performing the method as provided herein.

Brief Description of the Drawings

Further details and advantages of the disclosure will be apparent from the drawings and the detailed description. There is shown in:

Fig. 1            a calibration setup for calibrating a measuring head according to an example;

Figs. 2A to 2C    image sensor information showing a calibration dynamic projection pattern at different of geometric distortion and of delay mismatch according to an example;

Fig. 3            a method for calibrating a measuring head according to an example;

Figs. 4 and 5     measuring systems according to various examples; and

Fig. 6            a calibrating system for calibrating a measuring head according to an example.

Detailed Description

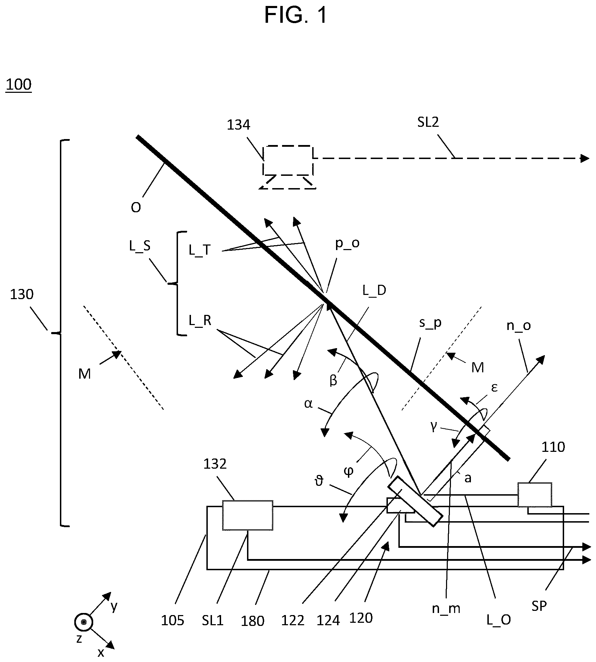

Fig. 1 shows schematically and exemplarily a calibration setup 100 for calibrating a measuring head 105. In the calibration setup 100, a measuring head 105 to be calibrated and a calibration object O are positioned relative to each other in a calibration position. The measuring head 105 is configured for optically determining a distance, for example a depth and/or a depth profile, of an object in a measuring field M of the measuring head 105. In the shown example, the measuring head 105 is a measuring head for use in an endoscope, such as a borescope. However, the calibration described herein is applicable also to other types of measuring heads. In the calibrating position, as shown in Fig. 1, the calibration object O is positioned to extend at least partially in the measuring field M of the measuring head 105. Moreover, for the purpose of the calibration described herein, a geometric relation between the measuring head 105 and the calibration object O, including, for example, a distance, an orientation and/or a depth profile of the calibration object O with respect to at least a part of the measuring head 105, is known when the measuring head 105 and the calibration object O are in the calibration position.

The measuring head 105 comprises a laser device 110 which outputs a laser beam L_O. The measuring head 105 further comprises a mirror device 120, comprising a light deflecting element 122 and an actuator 124 configured to change a position of the light deflecting element 122 relative to a mounting of the mirror device 120 on a body of the measuring head 105. The light deflecting element 122 and the actuator 124 constitute a variable mirror arrangement of the mirror device 120. The measuring head 105 further comprises an optical sensor device 132. The laser device 110, the variable mirror arrangement 122, 124 and the optical sensor device 132 are arranged on a support structure 180 of the measuring head 105. In the example, the actuator 124 is configured to change the position of the light deflecting element 122 relative to a mounting of the variable mirror arrangement 122, 124 on the support structure 180.

The laser device 110 and the variable mirror arrangement 122, 124 are arranged such that the mirror device 120 receives the laser beam L_O output by the laser device 110 at the light deflecting element 122. The light deflecting element 122 is configured to deflect the received laser beam L_O, L_D towards a measuring field M of the measuring head 105.

During operation of the measuring head 105, when an object, such as calibration object O in the setup 100, is in the measuring field M, the deflected laser beam L_D impinges on the object and is reflected at the object, for example, at a surface of the object facing towards the measuring head 105. Furthermore, in typical applications, reflection of the deflected laser beam L_D at an object in the measuring field M coincides with a scattering of the laser light, whereby portions of the scattered reflected light L_R are reflected towards the measuring head 105, as shown in Fig. 1.

The optical sensor device 132 receives and detects some of the reflected light L_R and generates and outputs a corresponding sensor signal SL1 towards a data processor of a control unit (not shown).

In some examples, as shown in Fig. 1, the optical sensor device 132 comprises an image sensor device. That is, the optical sensor device 132 detects a position in an image plane, for example, on a planar array of sensor pixels, of the optical sensor device 132 at which the received reflected light L_R is detected. In such case, the signal SL1 output by the optical sensor device 132 corresponds to an image sensor signal, i.e., the signal SL1 includes encoded image information on the position of the received reflected light L_R in the image plane of the optical sensor device 132, which, for example, permits depth measurements based on trigonometric methods, as described in more detail below. In some of these examples, the image information contained in the image sensor signal SL1 also permits performing the calibration described below, without necessitating image information from an additional image sensor.

In other examples, in which the optical sensor device 132 is unsuited for acquiring image information, for example, if the optical sensor device 132 comprises a single photodiode, as can be used in time-of-flight based optical depth measuring, or in which image information provided by the optical sensor device 132 is unsuited for the calibration for any reason, or in which redundancy of the available image information is desired, etc., an external image sensor device 134 is additionally employable for the calibration as part of the image sensor arrangement 130, as indicated in Fig. 1 by dashed lines. The external image sensor device 134 is configured to output an image sensor signal SL2.

In the example shown in Fig. 1, the calibration object O comprises at least partially transparent material, such as glass. In consequence, scattering of the impinging laser beam L_D on the (for example, roughened) surface of the calibration object O will produce scattered light L_S which is reflected, in the form of reflected light L_R, towards a side facing the measuring head 105, and it will also produce scattered light L_S which is transmitted through the calibration object O, in the form of transmitted light L_T, towards a side facing away from the measuring head 105. This permits an arrangement of the external image sensor device 134 on a side of the calibration object O which faces away from the measuring head 105, as shown in Fig. 1. In other examples, such as when a non-transparent calibration object O is used, one or more external image sensor devices 134 may alternatively, or additionally, be arranged on the side of the calibration object O facing the measuring head 105, as convenient.

The mirror device 120 is configured to automatically vary, by varying the position of the light deflecting element 122, a direction in which the laser beam L_O, L_D is deflected during operation of the measuring head 105. Furthermore, the mirror device 120 is configured to output, for example, continuously or at intervals, a position signal SP which is indicative of the variable position of the mirror arrangement 120, 122. For example, the position signal SP is indicative an orientation of a surface normal of the light deflecting element 122, or inclination angles of the light deflecting element 122 about each of at least two non-parallel axes with respect to a reference inclination of the light deflecting element 122 about each of these axes, etc.

As shown schematically by the horizontal arrows in Fig. 1, the measuring head 105 is configured to output the image sensor signal SL1 and the position signal SP, for example, towards a data processor which, for an intended operation of the measuring head 105, has been programmed to process the signals SL1, SP to derive from these signals a depth profile of the object O, such as in accordance with the above-described triangulation or time-flight-based measuring. Additionally, or alternatively, the data processor has been programmed in some examples to perform calibration of the measuring head 105 using the image sensor signal SL1 and the position signal SP. To this end, the measuring head 105 is operationally couplable to a data processor, as described in more detail below.

As can be understood from Fig. 1, when a position of the light deflecting element 122 is varied by means of the actuator 124, a deflection angle of the deflected laser beam L_D changes correspondingly, and the deflected laser beam L_D will be reflected at a different point p_o of the object O. This typically causes that the reflected light L_R is detected at a different position in the image plane of the optical sensor device 132. As can be further understood from Fig. 1, for any given distance of reflection points p_o in the measuring field M, such as on object O, from the measuring head 105, each position of the light deflecting element 122 typically corresponds to a particular position in the image plane of the optical sensor device 132 at which the reflected light L_R is detected. As can be further understood from Fig. 1, when a distance between the object O and the measuring head 105 varies, a point p_o at which the deflected laser beam L_D is reflected at the object O typically also changes for any given direction of the deflected laser beam L_D, and, due to a spatial offset between the mirror device 120 and the optical sensor device 132, a position at which the reflected light L_R is detected in the image plane of the optical sensor device 132 also changes.

Consequently, in the shown example, when the relationship between any of multiple directions of the deflected laser beam L_D, a position at which the reflected light L_R is detected in the image plane of the optical sensor device 132, and a distance of the reflection point p_o in the measuring field M from the measuring head 105 is known, the image sensor signal SL1 and the position signal SP are indicative of the distance of the corresponding reflection point p_o at the object O, according to a depth profile of the object O, by way of triangulation. In other examples, such as with measuring heads for time-of-flight based optical measuring by means of an optical sensor device unsuited for acquiring image information, a distance of any reflection point p_o of an object O is indicated by the position signal SP and a time-dependent characteristic of a sensor signal received from the optical sensor device 132, depending on propagation characteristics of the deflected laser beam L_D, etc.

In any case, a relationship between a position signal SP output by the variable mirror arrangement 122, 124 and an effective deflection of the laser beam L_O, L_D with respect to the measuring field M corresponding to the position signal SP needs to be precisely established for locally resolved depth measurements. This relationship varies among different measuring heads 105, for example, depending on variations in the mounting of the laser device 110 and/or of the mirror device 120 on the support structure 180 during fabrication of the measuring head 105, on variations in the fabrication of the mirror device 120, and the like. Measurement precision thus depends on a suitable calibration.

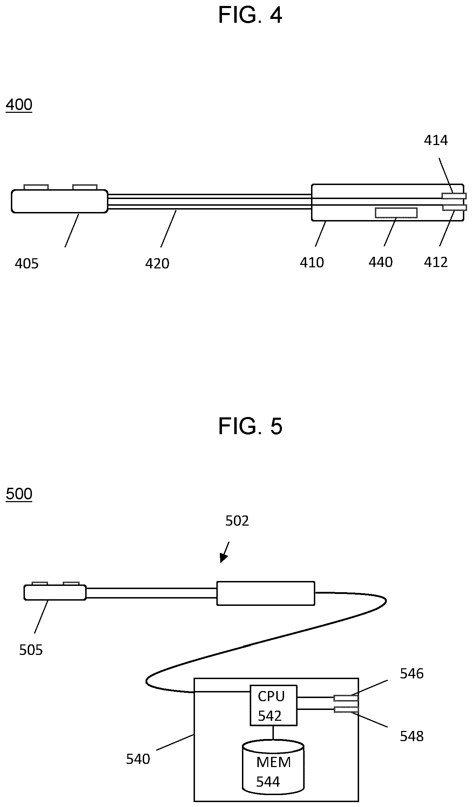

In some examples, when one or more of the aforesaid relationships have been determined, as described in more detail below, these relationships are stored in a storage device of a measuring system associated with the measuring head 105 for subsequent use thereof, as described below in connection with Figs 4 and 5.

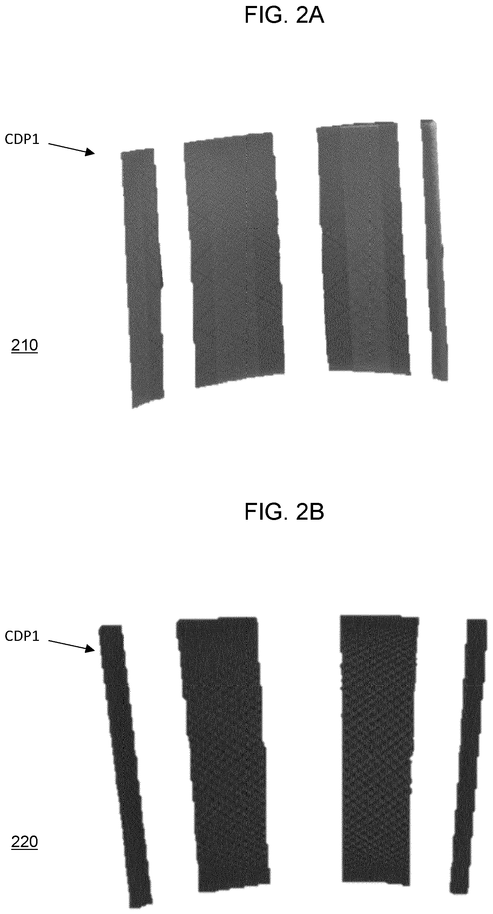

In the shown example, a position of the light deflecting element 122 is variable about two non-parallel axes of the light deflecting element 122. Consequently, the measuring field M covers a solid angle, and an areal depth profile of the object O is measurable by means of the measuring head 105. As schematically shown in Fig. 1, the mirror device 120 is configured to receive a control or activation signal, for example, from a control device of a measuring system (not shown), as described in more detail below. Based on the received control or activation signal, the mirror device 120 is configured to deflect the laser beam L_O towards the measuring field M in accordance with a dynamic projection pattern, as described exemplarily below with reference to Figs 2A to 2C.

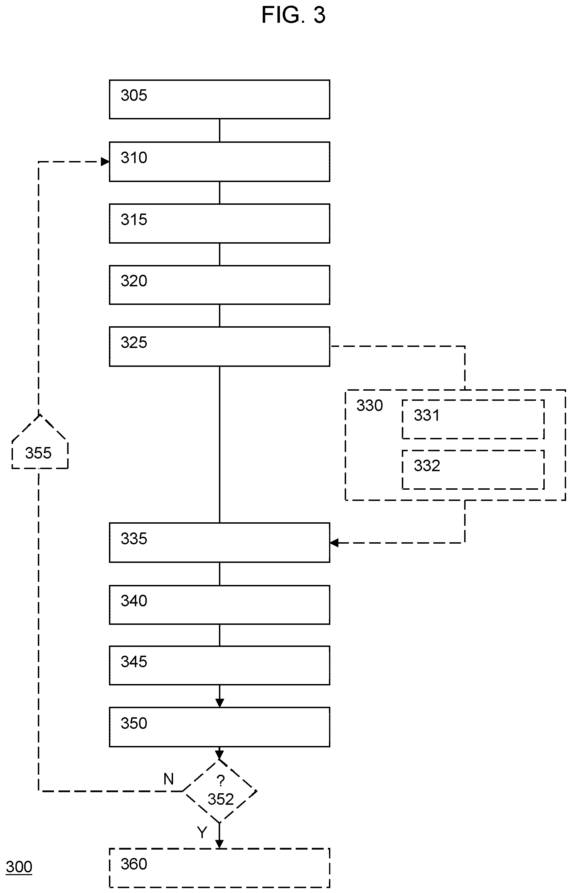

In some examples, the variable mirror arrangement 122, 124 is an oscillating mirror arrangement. That is, the actuator 124 is configured to drive the light deflecting element 122 such that the position of the light deflecting element 122 varies by oscillation. In addition, the mirror device 120 is configured to drive the light deflecting element 122 such that the light deflecting element 122 oscillates about two non-parallel axes. In some of these examples, an oscillation about a first one of the two non-parallel axes has a different periodicity than an oscillation about the other, i.e., second, axis. In other examples, the mirror device 120 is configured to drive the light deflecting element 122 such that the light deflecting element 122 oscillates about the first one of the two non-parallel axes and rotates uni-directionally about the second axis, wherein the oscillation about the first axis has a different periodicity than the uni-directional rotation about the second axis. As described in more detail in connection with Figs 3A and 3B, by suitable selection of the oscillation, and, where applicable, uni-directional rotation, frequencies, this facilitates a quasi-areal coverage of the measuring field M, or parts thereof, by deflecting the laser beam L_D according to one or more Lissajous curves, without a requirement of an active and precise position control of the light deflecting element 122.

In some examples, the variable mirror arrangement 122, 124 is a micro-electromechanical system, MEMS. Implementing the variable mirror arrangement 122, 124 as a MEMS facilitates a miniaturized implementation of a measuring head 105 which is capable of covering a two-dimensional measuring field M. In particular, by implementing the variable mirror arrangement 122, 124 as a MEMS, it is possible to minimize a diameter of the measuring head 105 perpendicular to an insertion direction of the measuring head 105.

The laser device 110 is switchable between an activated state, in which the laser beam L_O is output by the laser device 110, and a deactivated state, in which a laser beam L_O is not output by the laser device 110. As described in more detail below in connection with Figs. 2A to 2C, the measuring head 105 facilitates switching the laser device 110 in accordance with the variable position of the mirror arrangement 122, 124 for projecting a calibration dynamic projection pattern towards the measuring field M.

Figs 2A to 2C show examples of image information 210, 220, 230 as acquired by means of an image sensor device which has been directed to a transparent calibration object on a side facing away from a measuring head, such as external image sensor device 134 in Fig. 1, while the measuring head was operated in accordance with a calibration dynamic projection pattern CDP1. A planar glass plate has been chosen as the at least partially transparent calibration object. The mirror device for projecting the calibration dynamic projection pattern CDP1 was implemented as a MEMS with an oscillating deflection plane having different oscillation frequencies about two orthogonal axes. In all Figs. 2A to 2C, the laser beam has been deflected in accordance with a single Lissajous curve. The different oscillation frequencies of the mirror device were chosen such that the resulting Lissajous curve provides for a quasi-areal coverage of an entire area of each calibration dynamic projection pattern.

Fig. 2A shows image information 210 containing a captured projection of the calibration dynamic projection pattern CDP1, which resembles a quadrilateral area from which three quadrilateral portions extending almost parallel to, and along the full length of, one of the sides of the quadrilateral area have been spared out, as if masked. In the shown example, geometric characteristics, in particular geometric borders between spared out and projected portions, of the calibration dynamic projection pattern CDP1, which constitute topographic landmarks of the calibration dynamic projection pattern CDP1, are produced by controlled switching of the laser device, based on the position signal output by the mirror device and an initial set of calibrating parameters (for example, all initial calibrating parameters assumed as '1'), when the laser beam coming from a projected portion enters one of the spared-out portions, and vice versa.

In the calibration dynamic projection pattern CDP1 as it is used in operating the measuring head, all borders extend rectilinearly and are pairwise either parallel or orthogonal to each other. In contrast, as can be seen in Fig. 2A, several of the borders of the calibration dynamic projection pattern CDP1 as projected and captured by the image sensor device are curved and/or pairwise non-parallel and non-orthogonal to each other. This geometric distortion as shown in Fig. 2A results mainly from an imprecise calibration of the measuring head with respect to the output position signal relative to an effective deflection of the laser beam by means of the variable mirror arrangement.

In addition, as visible in Fig. 2A, a delay mismatch in the switching of the laser device depending on either of two opposite directions (essentially transverse to an extension of the spared-out portions) in which the variable mirror arrangement can be moved causes 'smearing' of the borders adjacent the spared-out portions. In the example shown, the delay mismatch can be determined experimentally, for example, by varying a time offset by which an output of a drive signal for the variable mirror arrangement is shifted when the variable mirror arrangement moves in the corresponding direction, or can be calculated based on a visible width of the smeared region along the pattern borders and knowledge of technical characteristics of the variable mirror arrangement regarding a velocity of its motion.

Fig. 2B shows image information 220 containing a captured projection of the calibration dynamic projection pattern CDP1 after the delay mismatch has been determined and a corresponding delay mismatch compensation parameter has been calculated and is applied during a controlling of the laser device. As can be seen by comparing Figs. 2A and 2B, the smearing of the borders in Fig. 2A has disappeared in Fig. 2B due to the compensation of the delay mismatch. However, geometric distortion is still present in Fig. 2B.

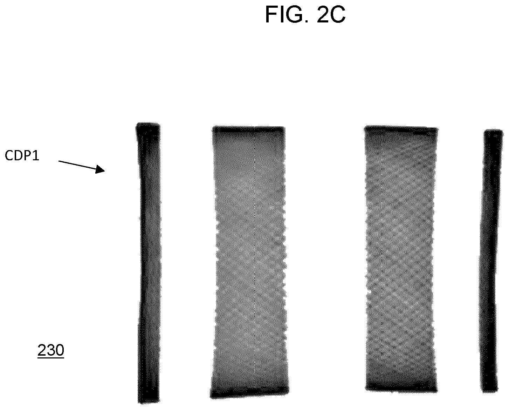

Fig. 2C shows image information 230 containing a captured projection of the calibration dynamic projection pattern CDP1 after a calibration of the measuring head has additionally been performed, as described herein, and a corresponding set of replacement calibration parameters instead of the (assumed) initial calibration parameters is additionally applied during a controlling of the laser device. As can be seen by comparing Fig. 2C with Figs. 2A and 2B, the geometric distortion which is present in Figs. 2A and Fig. 2B is essentially avoided, or compensated, in Fig. 2C as a result of the calibration.

For calibrating the measuring head, an analysis of the image information 220 is performed to identify therein topographic landmarks of the calibration dynamic projection pattern CDP1, such as borders and/or corners and their respective position(s) in the image. Then, a deviation is determined between the position of each of the topographic landmarks in the image information 220 and a reference position of the respective topographic landmark. The reference position corresponds, for example, to a (relative and/or absolute) position of the landmark(s) when the calibration dynamic projection pattern CDP1 is projected onto the calibration object to appear undistorted. For an at least partially automatic performance of the calibration, in some examples, the reference positions are stored on a data storage device coupled to a data processor which is used for performing the calibration.

Based on the determined deviation(s), the replacement calibration parameters for the measuring head are determined, for example, by means of a data processor. This is done in some examples in an iterative manner, by repeated performance of the aforesaid operations, wherein in each case the latest set of replacement calibration parameters is used. Alternatively, in some examples, the replacement calibration parameters are determined by a single, definitive, calculation.

In any case, the replacement calibration parameters are determined based on the image information and the determined deviation(s) using a geometrical model which accounts for the variable path of the laser beam, the variable orientation of the variable mirror arrangement and a geometric length in the relative arrangement of the calibration object and the measuring head.

Referring to Fig. 1, the geometric model includes spherical angles $\varphi$ and $\vartheta$, which describe an orientation of the light deflecting element 122 relative to a normal position, or zero position, of the light deflecting element 122 with respect to a body of the measuring head 105, for example, with respect to a mounting of the mirror device 120 on the support structure 180. In the shown example, the normal position, or zero position, of the light deflecting element 122 corresponds to a position in which a surface normal n_m of the light deflecting element 122 coincides with the y-axis of an assumed cartesian coordinate system, wherein angle $\vartheta$ is an azimuthal angle, and angle $\varphi$ is a polar angle.

The geometric model also includes spherical angles $\alpha$ and $\beta$, which describe a direction of the deflected laser beam L_D relative to the surface normal n_m of the light deflecting element 122 at zero position. In the example, the origin of the cartesian coordinate system is assumed to be at the reflection point of the laser beam L_O, L_D on the light deflecting element 122, wherein the variable position of the light deflecting element 122 varies about the origin, and the y-axis is defined by the projection of the output laser beam L_O onto a plane perpendicular to the surface normal n_m of the light deflecting element 122, angle $\beta$ is a polar angle, and angle $\alpha$ is an azimuthal angle. The angles $\alpha$ and $\beta$ depend on a relative position of the light deflecting element 122 to direction of the output laser beam L_O. The deflected laser beam L_D impinges on the calibration object O at the point p_o.

In the shown example, the geometric model further includes the distance parameter a representing a length of the distance between the calibration object O and the light deflecting element 122. In other examples, a distance parameter is dispensed with in the geometric model, as is enabled, for example, by considering (exclusively) relative proportions and/or angles between identifiable geometric elements in a projection pattern of the deflected laser beam L_D on the calibration object. Furthermore, in the shown example, the calibration object O is assumed to have a flat planar shape, constituting a projection plane s_p, which is arranged to extend orthogonally to the surface normal n_m of the light deflecting element 122 at zero position. However, in other examples, the projection plane s_p is tilted relative to the to the surface normal n_m of the light deflecting element 122, wherein such tilt is represented in the geometric model by the spherical angles $\gamma$ and $\varepsilon$, of which angle $\gamma$ is an azimuthal angle, and angle $\varepsilon$ is a polar angle.

With the above, for example, the following equations, which constitute a geometric model, apply for the projection of the deflected laser beam L_D in Fig. 1, which in the following equations is expressed as vector '$\vec{r}$', onto the projection plane s_p having the surface normal n_o in Fig. 1, which in the following equations is expressed as vector '$\vec{n}$':

$$\text{(Equation 1: )} \quad \vec{n} = \begin{pmatrix} \sin\gamma\cos\varepsilon \\ \sin\gamma\sin\varepsilon \\ \cos\gamma \end{pmatrix}$$

$$\text{(Equation 2: )} \quad \vec{r} = r \cdot \begin{pmatrix} \sin\vartheta\cos\varphi \\ \sin\vartheta\sin\varphi \\ \cos\vartheta \end{pmatrix}$$

$$\text{(Equation 3: )} \quad 0 = \left[ \begin{pmatrix} x \\ y \\ z \end{pmatrix} - \begin{pmatrix} 0 \\ a \\ 0 \end{pmatrix} \right] \cdot \vec{n}$$

Combining yields the following:

$$\text{(Equation 4: )} \quad 0 = r \cdot \sin\vartheta\cos\varphi \cdot n_x + (r \cdot \sin\vartheta\sin\varphi - a) \cdot n_y + r \cdot \cos\vartheta \cdot n_z,$$

or, reformulated:

$$\text{(Equation 5: )} \quad \frac{a}{r} \cdot n_y = \sin\vartheta\cos\varphi \cdot n_x + \sin\vartheta\sin\varphi \cdot n_y + \cos\vartheta \cdot n_z,$$

or, reformulated:

$$\text{(Equation 6: )} \quad r = \frac{a}{\sin\vartheta\cos\varphi\cdot\frac{n_x}{n_y} + \sin\vartheta\sin\varphi + \cos\vartheta\cdot\frac{n_z}{n_y}}$$

Thus, by insertion:

$$\text{(Equation 7: )} \quad r = \frac{a}{\sin\vartheta\cos\varphi\cdot\cot\varepsilon + \sin\vartheta\sin\varphi + \cos\vartheta\cdot\frac{\cot\gamma}{\sin\varepsilon}}$$

If one assumes an orthogonally incident laser beam on the light deflecting element, the above would yield:

$$\text{(Equation 8: )} \quad \vec{r} = a \cdot \begin{pmatrix} \frac{1}{\cot\varepsilon + \frac{\cot\gamma\cot\vartheta}{\sin\varepsilon\cos\varphi} + \tan\varphi} \\ \frac{1}{\cot\varepsilon\cot\varphi + \frac{\cot\gamma\cot\vartheta}{\sin\varepsilon\sin\varphi} + 1} \\ \frac{1}{\tan\vartheta(\cot\varepsilon\cos\varphi + \sin\varphi) + \frac{\cot\gamma}{\sin\varepsilon}} \end{pmatrix}$$

With an obliquely incident laser beam on the light deflecting element, Equation 8 changes to:

$$(\text{Equation 9: }) \ \vec{r} = a \cdot \begin{pmatrix} \dfrac{1}{\cot\varepsilon + \dfrac{\cot\gamma\cot(\vartheta+\alpha)}{\sin\varepsilon\cos(\varphi+\beta)} + \tan(\varphi+\beta)} \\[4ex] \dfrac{1}{\cot\varepsilon\cot(\varphi+\beta) + \dfrac{\cot\gamma\cot(\vartheta+\alpha)}{\sin\varepsilon\sin(\varphi+\beta)} + 1} \\[4ex] \dfrac{1}{\tan(\vartheta+\alpha)(\cot\varepsilon\cos(\varphi+\beta) + \sin(\varphi+\beta)) + \dfrac{\cot\gamma}{\sin\varepsilon}} \end{pmatrix}$$

By means of the above geometric model, the spherical angles $\varphi$ and $\vartheta$ can be determined from acquired image data showing a projection of the deflected laser beam L_D onto a plane of the calibration object O. Relating the spherical angles $\varphi$ and $\vartheta$ to the one or more position signals SP then enables determining corresponding calibration parameters for the measuring head 105.

Fig. 3 shows a flow diagram of a method 300 for calibrating a measuring head. The method 300 is applicable, for example, to calibrate a measuring head according to any of the examples described in connection with the measuring head 105 shown in Fig. 1.

The method 300 comprises positioning the measuring head relative to a calibration object such that the calibration object is in the measuring field of the measuring head in accordance with the calibration position of the measuring head and the calibration object, step 305. The method 300 further comprises varying the position of the variable mirror arrangement of the measuring head, step 310, and receiving one or more position signals from the variable mirror arrangement, wherein the position signals are indicative of the varying position of the variable mirror arrangement, step 315.

The method 300 further comprises operating the laser device of the measuring head, step 320. Operating the laser device comprises switching the laser device between an activated state and a deactivated state in accordance with the calibration dynamic projection pattern depending on the varying position of the variable mirror arrangement. The varying position of the variable mirror arrangement is determined based at least partially on the one or more position signals and one or more calibration parameters applied to the one or more position signals.

The method 300 further comprises receiving image sensor data from an image sensor arrangement, step 325. The image sensor data is indicative of a varying position of scattered light of the output and deflected laser beam of the measuring head in at least one image plane of the image sensor arrangement. The scattered light comprises light of the laser beam which has been scattered by the calibration object towards the image sensor arrangement.

The method 300 further comprises identifying at least one topographic landmark of the calibration dynamic projection pattern represented in image information which is encoded in the image sensor data based on an analysis of the image information, step 335, and determining the deviation between a position of the at least one topographic landmark in the image information and a reference position of the at least one topographic landmark, step 340.

The method 300 further comprises determining one or more replacement calibration parameters based on the deviation, wherein the replacement calibration parameters are configured to compensate at least partially the deviation when, in an operation of the laser device, the varying position of the variable mirror arrangement is determined based at least partially on the one or more position signals and the one or more replacement calibration parameters applied to the position signals, step 345. Determining the one or more replacement calibration parameters is performed at least partially based on a geometric model which comprises an incident angle of the laser beam with respect to an orientation of the surface of the calibration object.

The method 300 further comprises setting the one or more replacement calibration parameters as the one or more calibration parameters, step 350.

In some examples of the method 300, as indicated in Fig. 3 by dashed lines, the method 300 further comprises, after setting the one or more replacement calibration parameters as the one or more calibration parameters in step 350, providing the one or more calibration parameters for use in one or more measurements by means of the measuring head, step 360. Such providing comprises, for example, storing the one or more calibration parameters in a data storage device of the measuring head and/or of a measuring system associated with, for example, comprising, the measuring head.

In some examples, determining the one or more replacement calibration parameters based on the geometric mode in step 345 is performed by a definitive calculation, for example, based on the entirety of geometric principles of the geometric model and the available image information.

In other examples, as indicated in Fig. 3 by dashed lines, determining the replacement calibration parameters is performed in an iterative manner, block 355, for example, as long as the replacement calibration parameters which have been determined during a given execution of the relevant steps of the method 300 do not comply with a break-off condition, block 352: N-branch. The break-off condition consists in some examples in a precision requirement, such as a deviation threshold between reference positions of the one or more topographic landmarks and the position of the corresponding topographic landmark in the image information when the determined replacement calibration parameters are applied to the position signals while operating the laser device and obtaining the image information.

In some examples of the method 300, a delay mismatch compensation operation is additionally performed, step 330. In examples in which the replacement calibration parameters are determined in an iterative manner, as described above, the delay mismatch compensation operation is performed, for example, during a first performance of the method steps 310 to 350 and is not performed again in subsequent iterations of these steps. The delay mismatch compensation operation service for compensating delay mismatch in the switching of the laser device, where such mismatch occurs with respect to different directions in which the variable mirror arrangement is variable. Such delay mismatch in switching the laser device based on the varying position of the variable mirror arrangement depending on the direction in which the variable mirror arrangement is being varied results, for example, from differences in a response delay of the variable mirror arrangement to a drive signal, in a response delay of the variable mirror arrangement regarding an output of the position signal, or any other type of imbalance causing temporal inequality in actuating and/or in a signal output of the variable mirror arrangement.

In some examples, the delay mismatch compensation operation 330 comprises identifying a delay mismatch in the switching of the laser device based on an analysis of the image information encoded in the image sensor data, step 331, and, based on the identified delay mismatch, determining one or more delay mismatch compensation parameters. The delay mismatch compensation parameters are configured to compensate at least partially the delay mismatch when the laser device is switched depending on the respective direction in which the variable mirror arrangement is varied and, additionally, based on the determined delay mismatch compensation parameters in operating the laser device, step 332. In some examples, the determined delay mismatch compensation parameters are stored in a data storage device associated with the measuring head for subsequent use of the delay mismatch compensation parameters in switching the laser device during subsequent operation of the measuring head.

Fig. 4 shows schematically and exemplarily a measuring system 400, in the form of an endoscope, for example, a borescope. The endoscope 400 comprises at a proximal end a handling portion 410 which is configured to be held by a user of the endoscope 400 and which is configured for manipulating the endoscope 400 before, during, and after a measurement. Attached to the handling portion 410 is a shaft 420 of the endoscope 400. At a distal end of the shaft 420, a measuring head 405 of the endoscope 400 is arranged. The measuring head 405 is a measuring head according to one or more of the examples described herein.

At the handling portion 410, an input interface 412 and an output interface 414 of the endoscope 400 are schematically shown. Furthermore, as schematically shown, the input interface 412 and the output interface 414 are operatively coupled to the measuring head 405 via electrically and/or optically conductive lines to facilitate the transmission of data and/or operational supply, such as a supply laser light from an external laser source, between the interfaces 412, 414 and one or more functional components of the measuring head 405. The interfaces 412, 414 enable operatively coupling the endoscope 400 to a data processor and, in some examples, to a supply unit for operating the endoscope 400.

The endoscope 400 further comprises a storage device 440, for example, a computer-readable non-volatile memory device. The data storage device 440 stores calibration parameters for the measuring head 405 which have been determined by means of a calibration as described herein. The calibration parameters stored on the data storage device 440 are readable by means of a data processor to which the endoscope 400 is couplable for operating the endoscope 400. The data processor processes the position signals received from the measuring head 405 by applying the read-out calibration parameters to the received position signals. In this way, calibrated position information on a varying position of a varying mirror arrangement of the measuring head 405 is obtained. The endoscope 400 thus constitutes a calibrated measuring system which comprises the measuring head 405 and the data storage device 440 containing the calibration parameters for the measuring head 405.

Fig. 5 shows schematically and exemplarily a measuring system 500 according to another example. The measuring system 500 comprises a measuring head 505 according to any of the examples described herein. The measuring head 505 is operatively coupled to a data processor 542 by means of one or more flexible cables. In the shown example, the measuring head 505 is part of a measuring device 502, such as an endoscope, of the measuring system 500. The data processor 542 is part of a control unit 540 of the measuring system 500, for example, a stationary or mobile computer device. The data processor 542 is operatively coupled to a data storage device 544 and to each of an input interface 546 and an output interface 548 of the control unit 540.

The data processor 542 is configured to receive position signal data and optical sensor information data from the measuring head 505, via the cable, and to output control signals for operating the measuring head 505. The data processor 542 is further configured to process the received sensor information for determining a depth profile of an object in a measuring field of the measuring head 505 in accordance with any of the examples described herein. To this end, calibration parameters for the measuring head 505, which have been determined by a calibration as provided herein, are stored on the data storage device 544 and are used by the data processor 542 in processing position signals from the measuring head 505 to obtain calibrated position information on a varying position of a varying mirror arrangement of the measuring head 505. The measuring system 500 thus constitutes a calibrated measuring system which comprises the measuring head 505 and the data storage device 544 containing the calibration parameters for the measuring head 505.

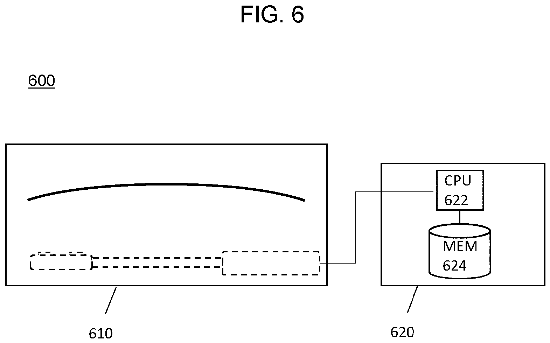

Fig. 6 shows schematically and exemplarily a calibrating system 600 for calibrating a measuring head. The calibrating system comprises a cradle 610 configured to accommodate a measuring head according to any of the examples described herein and a calibration object, in accordance with a calibration position of the measuring head and the calibration object. The calibrating system 600 further comprises a control unit 620, the control unit 620 comprising a data processor 622 operatively connectable to a measuring head accommodated in the cradle 610 and configured to receive data signals from the measuring head and to generate control signals for output to the measuring head. The control unit 620 further comprises a data storage device 624 operatively coupled to the data processor 622 and comprising portions of program code which, when executed by the data processor 622 configure the data processor 622 to perform calibration of the measuring head in accordance with the calibration provided herein.

In some examples, calibration parameters which have been determined by means of the calibrating system 600 are transferrable, for example, by means of wired or wireless data transmission, mobile storage, etc., to a storage device of a measuring system associated with the respective measuring head, such as storage devices 440, 544, for use of the calibration parameters with the measuring head.

In the above examples, the calibration has been described in connection with measuring heads for endoscopes comprising an oscillating mirror arrangement and an image sensor device for depth profile measurements. However, it is understood that the described calibration is advantageously applicable also to other types of measuring heads, comprising other types of variable mirror arrangements and/or other types of optical sensor devices.

## Claims

1.   Method (300) for calibrating a measuring head (105; 405; 505), the measuring head (105; 405; 505) comprising:

- a laser device (110) switchable between at least one activated state in which a laser beam (L_O) is output by the laser device (110) and at least one deactivated state in which a laser beam (L_O) is not output by the laser device (110);
- a variable mirror arrangement (122, 124) configured to receive a laser beam (L_O) output by the laser device (110) and to deflect the received laser beam (L_O, L_D) towards a measuring field (M) of the measuring head (105; 405; 505), and
- an optical sensor device (132) configured to receive reflected light (L_R) of the laser beam (L_D), the reflected light (L_R) reflected towards the measuring head (105; 405; 505) by one or more objects (O) in the measuring field (M),

wherein the method (300) comprises:

- positioning (305) the measuring head (105; 405; 505) relative to a calibration object (O) such that the calibration object (O) is in the measuring field (M) of the measuring head (105; 405; 505) in accordance with a calibration position of the measuring head (105; 405; 505) and the calibration object (O),
- varying (310) a position of the variable mirror arrangement (122, 124),
- receiving (315), from the variable mirror arrangement (122, 124), one or more position signals (SP) indicative of the varying position of the variable mirror arrangement (122, 124),
- operating (320) the laser device (110), comprising switching the laser device (110) between the activated state and the deactivated state in accordance with a calibration dynamic projection pattern (CDP1) depending on the varying position of the variable mirror arrangement (122, 124), the varying position of the variable mirror arrangement (122, 124) determined based at least partially on the one or more position signals (SP) and one or more calibration parameters applied to the one or more position signals (SP),
- receiving (325), from an image sensor arrangement (130, 132, 134), image sensor data (SL1, SL2) indicative of a varying position of scattered light (L_S) of the laser beam (L_D) in at least one image plane of the image sensor arrangement (130, 132, 134), the scattered light (L_S) comprising light (L_S) of the laser beam (L_D) which has been scattered by the calibration object (O) towards the image sensor arrangement (130, 132, 134),
- identifying (335), based on an analysis of image information (210; 220) encoded in the image sensor data (SL1, SL2), at least one topographic landmark of the calibration dynamic projection pattern (CDP1; CDP2) represented in the image information (210; 220),
- determining (340) a deviation between a position of the at least one topographic landmark in the image information (210; 220) and a reference position of the at least one topographic landmark,
- determining (345), based on the deviation, one or more replacement calibration parameters configured to compensate at least partially the deviation when, in the operating (320) of the laser device (110), the varying position of the variable mirror arrangement (122, 124) is determined based at least partially on the one or more position signals (SP) and the one or more replacement calibration parameters applied to the one or more position signals (SP), wherein determining (345) the one or more replacement calibration parameters is performed at least partially based on a geometric model which comprises a set of geometric angles ($\varphi$, $\vartheta$, $\alpha$, $\beta$, $\gamma$, $\varepsilon$), the set of geometric angles ($\varphi$, $\vartheta$, $\alpha$, $\beta$, $\gamma$, $\varepsilon$) representing at least the varying position of the variable mirror arrangement (122, 124), in particular with respect to a body of the measuring head (105; 405; 505), and a direction of the deflected laser beam (L_D) with respect to the varying position of the variable mirror arrangement (122, 124), and
- setting (350) the one or more replacement calibration parameters as the one or more calibration parameters.

2. Method according to claim 1, further comprising:

   - sequentially iterating (355) all of the varying (310), receiving (315, 325), operating (320), identifying (335), determining (340, 345), and setting (350)-steps, when a break-off condition is not met (352: N).

3. Method according to claim 2, further comprising:

   - determining whether a mathematical description of the position of the calibration object (O) is available,

   wherein:

   - sequentially iterating (355) all of the varying (310), receiving (315, 325), operating (320), identifying (335), determining (340, 345), and setting (350)-steps is performed when it has been determined that a mathematical description of the position of the calibration object (O) is not available, and/or
   - when it has been determined that a mathematical description of the position of the calibration object (O) is available, determining (345) the one or more replacement calibration parameters is performed at least partially based on the geometric model, wherein the geometric model includes the mathematical description of the position the calibration object (O), in particular without sequentially iterating (355).

4. Method according to any one of the preceding claims, wherein the method (300) further comprises, after setting (350) the one or more replacement calibration parameters as the one or more calibration parameters and/or when a break-off condition is met (352: Y):

   - providing (360) the one or more calibration parameters for use in one or more measurements by means of the measuring head (105; 405; 505),

   wherein, as an option, providing (360) the one or more calibration parameters comprises storing the one or more calibration parameters in a data storage device (440; 544) of the measuring head (105; 405; 505) and/or of a measuring system (400; 500) associated with the measuring head (105; 405; 505).

5. Method according to any one of the proceeding claims, wherein the geometric model further comprises at least one distance parameter (a) representing a geometric length in a relative arrangement of the calibration object (O) and the measuring head (105; 405; 505), in particular in a relative arrangement of the calibration object and the variable mirror arrangement (122, 124).

6. Method according to any one of the preceding claims, wherein:

   - the image sensor arrangement (130, 132, 134) comprises the optical sensor device (132), and the scattered light (L_S) of the laser beam (L_D) which has been scattered by the calibration object (O) towards the image sensor arrangement (130, 132, 134) comprises reflected light (L_R) which has been reflected by the calibration object (O) towards the optical sensor device (132), and/or
   - the image sensor arrangement (130, 132, 134) is implemented at least partially external to the measuring head (105; 405; 505), and, as an option, the scattered light (L_S) of the laser beam (L_D) which has been scattered by the calibration object (O) towards the image sensor arrangement (130, 132, 134) comprises transmitted light (L_T) which has been transmitted by the calibration object towards the image sensor arrangement (130, 134).

7. Method according to any one of the preceding claims, wherein the calibration object (O) comprises a calibration plate (O) arranged such that it extends transverse ($\gamma$) to a direction of the deflected laser beam (L_D),
   wherein, as an option, the calibration plate (O) comprises transparent material configured to scatter incident light of the deflected laser beam (L_D) and to at least partially reflect (L_R) and/or transmit (L_T) the scattered light (L_S) of the deflected laser beam (L_D).

8. Method according to any one of the preceding claims, further comprising a delay mismatch compensation operation (330) for at least partially compensating at least one delay mismatch in the switching of the laser device (110) associated with different directions in which the variable mirror arrangement (122, 124) is variable, wherein, as an option, the delay mismatch compensation operation (330) comprises:

- identifying (331), based on an analysis of image information (210; 220) encoded in the image sensor data (SL1, SL2), at least one delay mismatch in the switching of the laser device (110), the at least one delay mismatch associated with different directions in which the variable mirror arrangement (122, 124) is varied when the laser device (110) is switched, and
- determining (332), based on the at least one delay mismatch, one or more delay mismatch compensation parameters configured to compensate at least partially the at least one delay mismatch when, in operating (320) the laser device (110), the laser device (110) is switched further depending on a respective one or more of the different directions in which the variable mirror arrangement (122, 124) is varied and based on the one or more delay mismatch compensation parameters,
wherein a subsequent operating (320) of the laser device (110) is performed using the one or more delay mismatch compensation parameters in switching the laser device (110), and
wherein, as an option, the method (300) further comprises:

- providing, in particular storing in a data storage device (440; 544) of the measuring head (105; 405; 505) and/or of a measuring system (400; 500) associated with the measuring head (105; 405; 505), the one or more delay mismatch compensation parameters for use in operating the laser device (110).

9. Method according to any one of the preceding claims, wherein the at least one variable mirror arrangement (122, 124) comprises an oscillating mirror arrangement configured to produce an oscillating deflection plane (122) for the laser beam (L_O, L_D),

wherein, as an option, the calibration dynamic projection pattern (CDP1; CDP2) is an areal calibration dynamic projection pattern and the oscillating deflection plane (122) is configured to oscillate about at least two non-parallel axes for deflecting the laser beam (L_O, L_D) towards the measuring field (M) in accordance with the areal calibration dynamic projection pattern,
wherein, further as an option, an oscillation of the deflection plane (122) about a first one of the at least two non-parallel axes has a first periodicity, and an oscillation of the deflection plane (122) about a second one of the at least two non-parallel axes has a second periodicity different from the first periodicity.

10. Method according to any one of the preceding claims, wherein the variable mirror arrangement (122, 124) is a micro-electro-mechanical system, MEMS.

11. Method according to any one of the preceding claims, wherein the measuring head (105; 405; 505) is configured to output the one or more position signals (SP) and, optionally, the image sensor data (SL1) towards a data processor (622) to which the measuring head (105; 405; 505) is operatively couplable,
wherein at least some of the varying (310), receiving (315, 325), operating (320), identifying (335), determining (340, 345), and setting (350)-steps are performed by means of the data processor (622).

12. Method according to any one of the preceding claims, wherein the calibrating is configured to render position signals (SP) output by the variable mirror arrangement (122, 124) and associated optical sensor data (SL1) output by the optical sensor device (132) indicative of a depth profile of one or more objects (O) in the measuring field (M) in an operation of the measuring head (105; 405; 505).

13. Calibrating system (600) for calibrating a measuring head (105; 405; 505), the calibrating system (600) comprising:

- a cradle (610) configured to accommodate a measuring head (105; 405; 505) and a calibration object (O) in accordance with a calibration position of the measuring head (105; 405; 505) and the calibration object (O), the measuring head (105; 405; 505) comprising:

  ○ a laser device (110) switchable between at least one activated state in which a laser beam (L_O) is output by the laser device (110) and at least one deactivated state in which a laser beam (L_O) is not output by the laser device (110);
∘ a variable mirror arrangement (122, 124) configured to receive a laser beam (L_O) output by the laser device (110) and to deflect the received laser beam (L_O, L_D) towards a measuring field (M) of the measuring head (105; 405; 505), and
∘ an optical sensor device (132) configured to receive reflected light (L_R) of the laser beam (L_D), the reflected light (L_R) reflected towards the measuring head (105; 405; 505) by one or more objects (O) in the measuring field (M), and

- a control unit (620) comprising:

∘ a data processor (622) operatively connectable to the measuring head (105; 405; 505) and configured to receive data signals (SP, SL1) from the measuring head (105; 405; 505) and to generate control signals for output to the measuring head (105; 405; 505), and
∘ a data storage device (624) operatively coupled to the data processor (622) and comprising portions of program code which, when executed by the data processor (622) configure the data processor (622) to perform the method according to any one of the preceding claims.

14. Calibrating system (600) according to claim 13, wherein the data processor (622) is further configured to store, in the data storage device (624), one or more calibration parameters which have been determined by means of the data processor (622).

15. Measuring system (400; 500) comprising a measuring head (405; 505) and a data storage device (440; 544), the data storage device (440; 544) storing one or more calibration parameters for the measuring head (405; 505), the one or more calibration parameters determined by performing the method according to any one of claims 1 to 12.

FIG. 1

## FIG. 2A

CDP1

210

## FIG. 2B

CDP1

220

FIG. 2C

CDP1

230

# FIG. 3

# FIG. 4

400

414

405      420        410   440   412

# FIG. 5

500

502

505

546

CPU
542

540

MEM
544

548

# FIG. 6

600

610

620

CPU
622

MEM
624

## EUROPEAN SEARCH REPORT

**Application Number**

EP 25 15 2152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/005682 A1 (MUNRO JAMES F [US] ET AL) 3 January 2019 (2019-01-03) | 15 | INV.<br>G01B11/24 |
| A | * the whole document * | 1-14 | G01B21/04 |
| | ----- | | |
| A | DE 10 2011 114156 B3 (DEUTSCH ZENTR LUFT & RAUMFAHRT [DE]) 28 March 2013 (2013-03-28)<br>* paragraphs [0038] - [0050]; claims 1-4; figure 2 * | 1-15 | |
| | ----- | | |
| A | DE 10 2015 219447 A1 (BOSCH GMBH ROBERT [DE]) 13 April 2017 (2017-04-13)<br>* paragraphs [0030] - [0034]; figure 1 *<br>* paragraphs [0041] - [0044]; figure 4 * | 1-15 | |
| | ----- | | |

**TECHNICAL FIELDS SEARCHED (IPC)**

G01B
G02B

The present search report has been drawn up for all claims

| Place of search | Date of completion of the search | Examiner |
|---|---|---|
| Munich | 1 July 2025 | Trique, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2152

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | Publication date |
|---|---|---|---|
| US 2019005682 A1 | 03-01-2019 | CA 3006554 A1 | 30-12-2018 |
| | | CN 109212747 A | 15-01-2019 |
| | | DE 102018113454 A1 | 03-01-2019 |
| | | JP 2019032301 A | 28-02-2019 |
| | | US 2019005682 A1 | 03-01-2019 |
| DE 102011114156 B3 | 28-03-2013 | NONE | |
| DE 102015219447 A1 | 13-04-2017 | NONE | |

EPO FORM P0459

For more details about this annex : see Official Journal of the European Patent Office, No. 12/82